# FASCICULE DE BREVET EUROPEEN

(11) **EP 0 642 946 B1**
(45) Date de publication et mention de la délivrance du brevet: **15.10.1997**
(21) Numéro de dépôt: 94401570.0
(22) Date de dépôt: 07.07.1994
(51) Int. Cl.: B60N 2/04

(54) **Glissière pour siège de véhicule automobile**
Kraftfahrzeugsitzschiene
Slide for motor vehicle seat

(30) Priorité: 09.09.1993 FR 9310747
(43) Date de publication de la demande: 15.03.1995
(73) Titulaire: CESA COMPAGNIE EUROPEENNE DE SIEGES POUR AUTOMOBILES, 92307 Levallois-Perret Cédex (FR)
(72) Inventeur: Delatte, Olivier, F-45200 Montargis (FR); Fourrey, François, F-25200 Montbeliard (FR); Geoffroy, Yves, F-45460 Les Bordes (FR)
(74) Mandataire: Polus, Camille

(56) Documents cités:
- DE-A- 3 046 165
- FR-A- 2 116 237
- FR-A- 2 530 557
- US-A- 4 508 385
- PATENT ABSTRACTS OF JAPAN vol. 13, no. 257 (M-837) (3605) 14 Juin 1989 & JP-A-01 060 445 (OI SEISAKUSHO)

## Description

La présente invention concerne les glissières comprenant un élément fixe et un élément mobile aptes à coulisser relativement l'un à l'autre selon une direction de translation et, plus particulièrement, une glissière perfectionnée utilisable notamment pour un siège de véhicule automobile.

Comme on le sait, les sièges de véhicules automobiles sont habituellement montés sur le sol ou plancher d'un véhicule qui les reçoit par l'entremise de glissières latérales. Ces glissières latérales autorisent un réglage longitudinal du siège qui permet à son occupant de choisir la position adaptée à sa morphologie et à la géométrie du véhicule, qui lui assure le maximum de confort pour y voyager ou bien pour piloter le véhicule selon son style de conduite.

Certaines de ces glissières sont équipées d'une "mémoire". Ces glissières à mémoire sont habituellement utilisées dans les véhicules à deux portes latérales notamment du type "coupé" ou "cabriolet" par exemple. Comme on le sait, pour ce type de véhicule il est nécessaire de déplacer un siège avant pour accéder au volume situé à l'arrière des siège avant. Le plus souvent, ce déplacement consiste au moins en une avance du siège en direction de l'avant du véhicule, à fond de course des glissières. Lors de la remise en place du siège, on n'est pas certain que celui-ci reprenne automatiquement sa position de réglage antérieure choisie qu'il occupait précédemment. Ceci est particulièrement désagréable et mal commode lorsqu'il s'agit du siège du conducteur puisque, à chaque fois, le conducteur doit s'assurer de la position reprise par le siège et, au besoin, la retoucher. Pour éviter ce type d'inconvénients, on utilise des glissières à mémoire. Les glissières à mémoire fonctionnent d'une manière telle qu'une fois le réglage en position longitudinale du siège fait selon les souhaits de son occupant, lorsqu'on avance le siège pour donner accès à l'arrière de celui-ci et qu'on recule ensuite le siège pour y prendre place par exemple, le siège reprend automatiquement la position antérieure dans laquelle il avait été placée.

Une glissière à mémoire est, par exemple, décrite dans le document FR 2 631 592 auquel on pourra utilement se reporter pour plus ample information.

Que les glissières de siège soient ou non à mémoire, elles sont soumises à des efforts importants en particulier lorsque le siège est équipé d'une ceinture de sécurité du type totalement ou partiellement "embarqué". L'expression ceinture embarquée désigne habituellement une ceinture de sécurité dont les points d'ancrage, habituellement trois, sont tels que l'un au moins d'entre eux n'est pas solidaire de la coque ou structure du véhicule comme cela est généralement le cas, mais au contraire est ancré directement ou indirectement sur le siège. Pour un siège équipé d'une ceinture de sécurité embarquée, les efforts que doit subir et transmettre la ceinture de sécurité en cas de choc à grande composante longitudinale, repérée par rapport au véhicule, sont donc répercutés à la structure du véhicule par exemple à son plancher par l'entremise de la glissière. On comprend immédiatement que la glissière qui supporte le siège et qui est interposée entre celui-ci et le plancher doit pouvoir subir non seulement les efforts normaux habituels liés au réglage et à l'occupation du siège mais aussi ceux exceptionnels qui résultent de tels chocs sans que pour autant la sécurité de son occupant soit compromise.

Ce type de problème est particulièrement délicat à résoudre lorsqu'on sait que pour des raisons d'encombrement, de poids et de coûts de production, de telles glissières doivent être de dimensions particulièrement réduites, d'une petite masse et d'un prix de revient modique et pourtant satisfaire aux normes de sécurité édictées par des organismes professionnels ou les Pouvoirs Publics.

FR-A-2 116 237 décrit une glissière, notamment pour siège de véhicule automobile, du type comprenant un élément fixe et un élément mobile aptes à coulisser relativement selon une direction de translation, un verrou avec une gâche associée à l'élément fixe et avec un pêne associé à l'élément mobile et coopérant avec la gâche pour à volonté se verrouiller ou se déverrouiller sur cette dernière afin d'immobiliser ou de libérer respectivement l'élément mobile relativement à l'élément fixe, une commande montée sur l'élément mobile et associée au pêne par un accouplement de manière à volonté pouvoir déverrouiller le pêne verrouillé normalement sur la gâche, l'élément fixe étant relié à un sol ou plancher par des moyens de fixation et comprenant un élément intérieur longitudinal qui forme localement la gâche.

Le but de l'invention est de construire une glissière perfectionnée notamment pour siège de véhicule automobile qui convienne notamment pour siège équipé d'une ceinture de sécurité au moins partiellement embarquée.

A cet effet l'invention a pour objet une glissière du type précité, caractérisée en ce que l'élément intérieur est un renfort ancré au sol ou plancher par l'entremise des moyens de fixation.

D'autres caractéristiques de l'invention ressortiront de la lecture de la description et des revendications qui suivent ainsi que de l'examen du dessins annexé, donné seulement à titre d'exemple, où:
- la Figure 1 est une vue perspective partielle extérieure d'un mode de réalisation d'une glissière selon l'invention; et
- la Figure 2 est une coupe selon le plan 2-2 de la Figure 1;

Les glissières, et en particulier les glissières pour siège de véhicules automobiles terrestres étant bien connues dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

A cet effet on pourra utilement se reporter en particulier au document précité.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un glissière perfectionnée selon l'invention avant d'en exposer au besoin la fabrication, et le fonctionnement.

Comme on le voit une glissière perfectionnée selon l'invention comprend, essentiellement, une glissière 10 proprement dite, un verrou 20, une commande 30, un support 40 et un renfort 50.

La glissière 10 comprend un élément 11 fixe et un élément 12 mobile qui sont aptes à coulisser relativement l'un à l'autre selon une direction de translation 100. Comme il est classique, l'élément fixe 11 est destiné à être solidarisé du sol ou plancher d'un véhicule non représenté, à l'aide de moyens de fixation appropriés de tout type connu alors que l'élément mobile 12 est destiné à recevoir une armature A de siège, comme il est classique. Comme on le voit, l'élément fixe 11 a, en section droite, une forme de C ou similaire ménageant une fente 101 longitudinale ouverte, parallèle à la direction de translation 100.

L'élément fixe 11 et l'élément mobile 12 sont munis de pistes 110 et 120 en V en vis-à-vis ou analogue comme illustré, dans lesquelles sont engagées notamment des billes 1000.

Tout ceci est classique et clairement illustré sur les figures du dessin.

Le verrou 20 comprend essentiellement une gâche 21 et un pêne 22. La gâche 21 se présente par exemple à la manière de crans équidistants de préférence régulièrement répartis à la manière d'une crémaillère ou similaires. Le pêne 22 se présente par exemple à la manière d'un levier monté mobile dans son plan, parallèlement au côté du C opposé à la fente 101 de l'élément fixe 11. Ce levier est muni d'au moins une dent ou similaire destinée à normalement être engagée dans les crans de la gâche pour maintenir le verrou verrouillé, ou bien à en être dégagée à volonté pour déverrouiller le pêne de la gâche et donc libérer l'élément mobile 12 de l'élément fixe 11. Une sollicitation élastique 23 telle une lame ressort de rappel fixée au pène et le suivant dans ses déplacements, maintient normalement le pêne verrouillé sur la gâche.

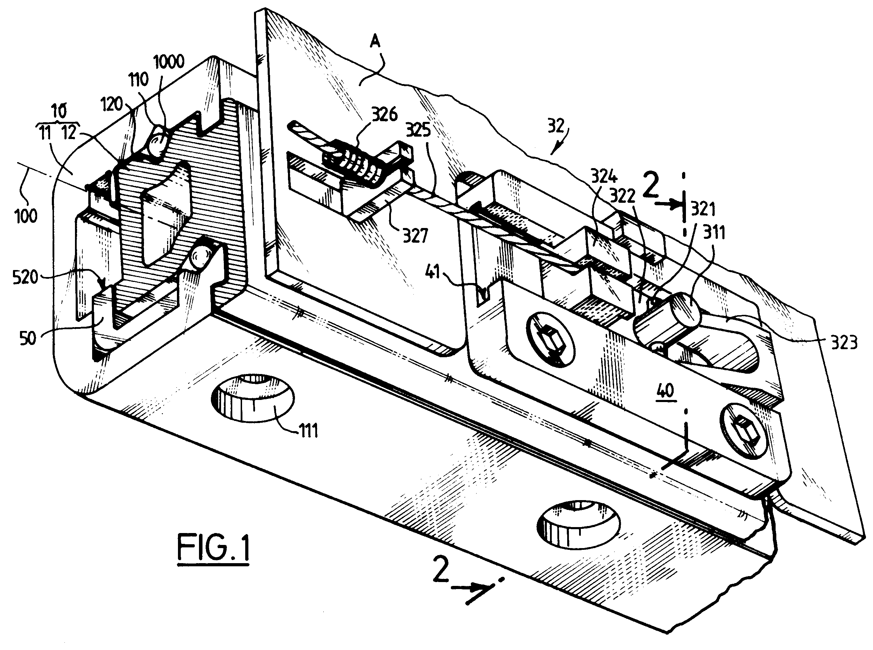

La commande 30 est, de préférence, double pour les raisons qui apparaîtront par la suite. Cette commande comprend une partie 31, associée à l'assise d'un siège. Cette partie 31 comprend essentiellement un axe 311, un ressort 312 de rappel et une poignée 313 de manoeuvre. On observera que l'axe 311 traverse la fente 101 et peut y circuler librement. Cette commande 30 est associée au pêne 22 par un accouplement 300 de manière à pouvoir à volonté déverrouiller le pêne 22 normalement verrouillé sur la gâche 21. Cet accouplement 300 est porté par l'une des extrémités libres de l'axe 311 et comprend des formes complémentaires non circulaires, mâle et femelle, en prise. Ces formes complémentaires non-circulaires de l'accouplement sont par exemple une cavité 301 ménagée dans le levier du pêne 22 et un embout 302 de l'axe 311 engagé dans cette dernière. De la sorte lorsqu'on fait tourner l'axe 311 sur lui-même on fait basculer le levier afin de séparer à volonté la ou les dents des crans dans lesquels elles étaient engagées pour déverrouiller le pêne 22 qu'elles verrouillaient normalement sur la gâche 21. L'autre des extrémités libres de l'axe 311 porte la poignée 313 de manoeuvre sur laquelle on agit pour déplacer l'axe 311. Le ressort 312 par exemple un ressort à boudin à spires hélicoïdales opère à la compression pour les raisons qui apparaîtront par la suite. Cette commande comprend aussi, s'il y a lieu, une partie 32 associée au dossier d'un siège. Cette partie 32 comprend, essentiellement une goupille 321 ou similaire engagée transversalement dans l'axe 311 de manière à laisser apparaître deux tétons opposés, une coulisse 322, une rampe 323 par exemple cunéiforme portée par la coulisse, un socle 324 porté par la coulisse et un câble Bowden ou similaire dont le câble 325 est ancré sur le socle et la gaine 326 repose contre un appui 327 du support. Tout ceci est clairement illustré sur la Figure 1.

Le support 40, solidaire de l'élément mobile 12 porte l'essentiel de la commande 30. Comme on le voit, ce support 40 sert de palier-guide à l'axe 311 et est creusé d'une chambre 400 cylindrique qui contient le ressort 312 comme illustré. Dans le support est aussi ménagée une rainure 41 ou similaire, orientée parallèlement à l'axe 100 par exemple. Cette rainure 41 par exemple en T ou en queue d'aronde en section droite reçoit la coulisse 322 pour diriger ses déplacements en translation. La coulisse occupe normalement la position où elle est illustrée sur la Figure 1. S'il y a lieu un ressort de rappel tend à la maintenir dans cette position pour les raisons qui apparaîtront par la suite. Ce support est fixé de toute manière classique convenable à l'élément mobile 12.

A titre facultatif, pour le cas où la glissière est aussi du type à mémoire, le pêne est muni d'une butée arrêtoir tel un bossage ou similaire qui coopère avec la commande et en particulier son axe, voire avec son support. En outre, dans ce cas, l'axe 311 peut aussi coulisser sur lui-même de manière à pouvoir, à volonté, débrayer l'accouplement 300 maintenu normalement embrayé comme illustré, par le ressort 312 de rappel opérant à la compression. Pour plus ample information on se reportera utilement au document précité.

Le renfort 50 a une section droite en L ou en équerre, dont une aile est placée au moins localement contre le côté intérieur du C opposé à la fente de l'élément fixe, et dont l'autre aile repose sur un côté du C voisin de la fente. Ceci est clairement illustré sur les figures du dessin. De la sorte, on voit que l'une 51 des ailes est pratiquement parallèle à l'axe 31 alors que l'autre 52 des ailes est pratiquement perpendiculaire à ce dernier. Comme on l'observera, l'aile 52 du renfort placée au moins localement contre le côté du C opposé à la fente 101 de l'élément fixe 11 présente une tranche 520, libre et c'est cette tranche libre qui est conformée pour servir de gâche, c'est-à-dire qui, pour ce mode de réalisation particulier, porte les crans de la crémaillère. L'aile 51 du renfort et le côté du C voisin de la fente de l'élément fixe contre lequel elle repose reçoivent les moyens de fixation tels des goujons 102, vis, boulons, etc ou analogues. Pour ce faire, le côté du C en question est transpercé d'au moins un alésage 111 et l'aile correspondante du renfort est transpercée d'au moins un logement 521. Ces alésage et logement sont placés en correspondance pour recevoir les moyens de fixation, comme illustré par exemple.

Pour le mode de réalisation illustré, les éléments fixes et mobiles de la glissière sont faits en un matériau à base d'aluminium et le renfort est fait en un matériau à base de fer tel qu'un acier de nuance appropriée. Les billes sont par exemple en une matière synthétique appropriée.

Tous les constituants d'une glissière perfectionnée selon l'invention sont fabriqués traditionnellement selon des techniques convenables appropriées aux matériaux dont ils sont faits.

Tous les constituants d'une glissière perfectionnée selon l'invention sont réunis, assemblés et montés comme cela ressort clairement des illustrations du dessin.

Le fonctionnement d'une glissière selon l'invention est le suivant. On supposera qu'il s'agit d'une glissière à mémoire du type général indiqué dans le document précité et qu'initialement elle occupe la position illustrée sur les figures du dessin.

Pour régler la position longitudinale d'un siège, il suffit d'agir sur la poignée dans le sens approprié, pour la faire basculer dans son plan à l'encontre du couple développé par exemple par le ressort de rappel du pêne. L'actionnement de la poignée est fait directement ou par l'entremise d'une timonerie souvent placée à proximité de l'assise du siège, à l'avant ou sur le côté de celle-ci. En faisant ceci, le pêne bascule pour se déverrouiller de la gâche tout en restant solidaire en translation de la commande voire de son support, par l'entremise de l'accouplement embrayé. On peut alors déplacer relativement l'un à l'autre les éléments mobile et fixe de la glissière jusqu'à la nouvelle position souhaitée dans laquelle elle est immobilisée automatiquement lorsqu'on relâche la poignée. On notera que le pêne suit l'élément mobile dans son coulissement.

Si maintenant il est nécessaire d'avancer totalement le siège pour donner accès à l'arrière de celui-ci, il suffit d'agir sur la goupille en l'éloignant de la glissière, pour faire coulisser l'axe sur lui-même à l'encontre de la sollicitation axiale développée par le ressort à boudin. L'actionnement de la goupille est fait, habituellement à l'aide d'une tirette ou similaire souvent placée sur le côté du dossier du siège proche de la coque ou structure, et, s'il y a lieu, reliée à une transmission agissant sur le câble Bowden ou analogue. On voit alors que le pêne reste immobile, normalement verrouillé en place dans la gâche car l'accouplement est débrayé désolidarisant la commande voire le support du pêne qui ne suit donc plus l'élément mobile dans son coulissement. On peut donc déplacer relativement l'un à l'autre les éléments mobile et fixe de la glissière jusqu'à l'extrémité la plus avancée de sa course. Lors du recul du siège, l'élément mobile et tout ce qui en est solidaire retrouveront automatiquement leur position initiale antérieure en rencontrant le pêne demeuré en place et jouant le rôle de butée.

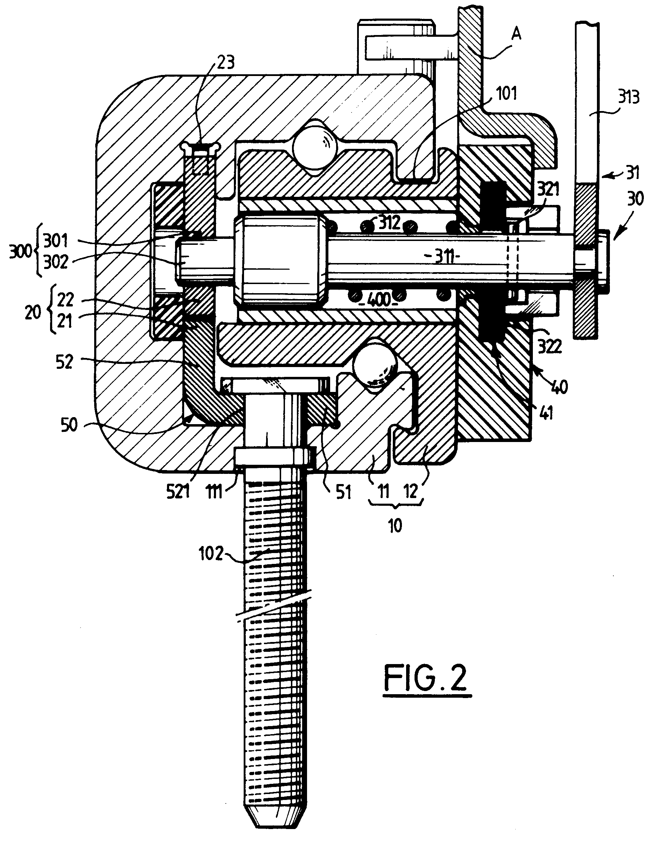

En observant les figures du dessin, on voit immédiatement que les sollicitations qui sont communiquées à la glissière par l'armature du siège qui lui est associée, sont transmises par le pêne au renfort qui est lui-même ancré au sol ou plancher par l'entremise des moyens de fixation, comme cela apparaît en particulier sur la Figure 2. On comprend donc que les éléments fixe et mobile de la glissière n'ont pour rôle essentiel que d'assurer un coulissement selon une direction de translation sans avoir à subir d'autres contraintes que celles liées à ce coulissement et/ou une occupation normale du siège.

Ce qui précède met bien en lumière l'intérêt qu'offre l'invention et les avantages qu'elle procure.

## Revendications

1. Glissière, notamment pour siège de véhicule automobile, du type comprenant un élément (11) fixe et un élément (12) mobile aptes à coulisser relativement selon une direction (100) de translation, un verrou (20) avec une gâche (21) associée à l'élément fixe (11) et avec un pêne (22) associé à l'élément mobile (12) et coopérant avec la gâche (21) pour à volonté se verrouiller ou se déverrouiller sur cette dernière afin d'immobiliser ou de libérer respectivement l'élément mobile (12) relativement à l'élément fixe (11), une commande (30) montée sur l'élément mobile (12) et associée au pêne (22) par un accouplement (300) de manière à volonté pouvoir déverrouiller le pêne (22) verrouillé normalement sur la gâche (21), l'élément fixe (11) étant relié à un sol ou plancher par des moyens de fixation (102), et comprenant un élément (50) intérieur longitudinal qui forme localement la gâche (21), caractérisée en ce que l'élément intérieur est un renfort (50) ancré au sol ou plancher par l'entremise des moyens de fixation (102).

2. Glissière selon la revendication 2, caractérisée en ce que l'élément fixe (11) a une section droite en forme de C ménageant une fente (101) longitudinale ouverte parallèle à une direction de translation (100) et en ce que le renfort (50) a une section droite en L dont une aile (52) est placée au moins localement contre le côté intérieur du C opposé à la fente (101) et dont l'autre aile (51) repose sur un côté du C voisin de la fente (101).

3. Glissière selon la revendication 2, caractérisée en ce que l'aile (52) du renfort (50) placée au moins localement contre le côté du C opposé à la fente (101) présente une tranche (520) libre, et en ce que cette tranche (520) est conformée pour servir de gâche (21).

4. Glissière selon l'une quelconque des revendications 2 et 3, caractérisée en ce que l'aile (51) du renfort et le côté du C voisin de la fente (101) contre lequel elle repose, reçoivent les moyens de fixation (102).

5. Glissière selon la revendication 4 caractérisée en ce que le côté du C voisin de la fente (101) de l'élément fixe (11) est transpercé d'au moins un alésage (111) et en ce que l'aile (51) du renfort (50) qui repose contre lui est transpercée d'au moins un logement (521), alésage (111) et logement (521) étant placés en correspondance pour recevoir les moyens de fixation (102).

6. Glissière selon l'une quelconque des revendications 1 à 5, caractérisée en ce que la gâche (21) du verrou (20) est faite de crans régulièrement répartis sur le renfort (50), en ce que le pêne (22) est un levier monté mobile dans son plan parallèlement au côté du C opposé à la fente (101) de l'élément fixe (11) et muni d'au moins une dent, et en ce que la commande (30) comprend un axe (311) apte à tourner sur lui-même qui traverse librement la fente (101) et qui porte à l'une de ses extrémités libres l'accouplement (300) qui l'associe au pêne (22) et qui comprend des formes (301, 302) complémentaires non-circulaires mâle et femelle en prise de manière à pouvoir faire basculer le levier afin de séparer à volonté la dent des crans pour déverrouiller le pêne (22) verrouillé normalement sur la gâche (21).

7. Glissière selon la revendication 6, caractérisée en ce que la commande (30) est portée par un support (40) solidaire de l'élément mobile (12).

8. Glissière selon la revendication 7, caractérisée en ce que le support (40) comprend un palier guide dans lequel est monté l'axe (311) de la commande (30).

9. Glissière selon la revendication 8, caractérisée en ce que le palier-guide est creusé d'une chambre (400) et en ce que cette chambre (400) contient un ressort (312) pour maintenir normalement le pêne (22) accouplé à la commande (30).

10. Glissière selon la revendication 9, caractérisée en ce que l'axe (311) est apte à coulisser sur lui-même de manière à pouvoir débrayer par translation d'accouplement (300) qui l'associe au pêne (22), en ce que le pêne (22) porte un bossage arrêtoir destiné à coopérer avec la commande (30) voire son support (40) afin de servir de butée mémoire de la position de réglage de manière que lorsqu'on fait tourner l'axe (311) le pêne (22) normalement verrouillé sur la gâche (21) bascule pour se déverrouiller de la gâche (21) tout en restant solidaire en translation de l'élément mobile (12) par l'entremise de l'accouplement (300) embrayé et de manière que lorsqu'on fait coulisser l'axe (311) à l'encontre des efforts axiaux du ressort (312) le pêne (22) reste immobile normalement verrouillé en place dans la gâche (21) en étant désolidarisé de l'élément mobile (12) l'accouplement (300) étant débrayé.

11. Glissière selon l'une quelconque des revendications 1 à 10, caractérisée en ce que les éléments fixe (11) et mobile (12) de la glissière sont à base d'aluminium et le renfort (50) est à base de fer.

## Claims

1. A sliding rail, in particular for a motor vehicle seat, of the type comprising a fixed element (11) and a movable element (12) designed to slide relatively in a direction (100) of translation, a lock (20) having a keeper (21) associated with the fixed element (12) and having a bolt (22) associated with the movable element (12) and cooperating with the keeper (21) so as to be locked or unlocked on the latter, as required, in order to immobilise or free respectively the movable element (12) relative to the fixed element (11), an operating device (30) mounted on the movable element (12) and associated with the bolt (22) by a coupling system (300) so as to be able to unlock, as required, the bolt (22) normally locked on the keeper (21), the fixed element (11) being connected to a base or flooring by fixing means (102) and comprising a longitudinal internal element (50) which locally forms the keeper (21), characterized in that the internal element is a reinforcing piece (50) anchored to the base or flooring by the interposition of the fixing means (102).

2. A sliding rail according to Claim 2, characterized in that the fixed element (11) has a cross-section in the form of a C having formed in it an open longitudinal slot (101) parallel to a direction of translation (100) and in that the reinforcing piece (50) has an L-shaped cross-section, one flange (52) of which is positioned at least locally against the inner side of the C opposite to the slot (101) and the other flange (51) of which rests on one side of the C close to the slot (101).

3. A sliding rail according to Claim 2, characterized in that the flange (52) of the reinforcing piece (50) positioned at least locally against the side of the C opposite to the slot (101) has a free section (520) and in that this section (520) is formed so as to serve as a keeper (21).

4. A sliding rail according to any one of Claims 2 and 3, characterized in that the flange (51) of the reinforcing piece and the side of the C close to the slot (101) against which it rests, receive the fixing means (102).

5. A sliding rail according to Claim 4, characterized in that the side of the C close to the slot (101) of the fixed element (11) is perforated by at least one bore (111) and in that the flange (51) of the reinforcing piece (50) which rests against it is perforated by at least one seating (521), said bore (111) and seating (521) being positioned opposite one another in order to receive the fixing means (102).

6. A sliding rail according to any one of Claims 1 to 5, characterized in that the keeper (21) of the lock (20) is made with notches uniformly distributed on the reinforcing piece (50), in that the bolt (22) is a lever mounted movable in its plane parallel to the side of the C opposite to the slot (101) of the fixed element (11) and provided with at least one tooth, and in that the operating device (30) comprises a shaft (311) which is designed to rotate on itself and which passes freely through the slot (101) and has at one its free ends the coupling system (300) which associates it with the bolt (22) and which comprises complementary non-circular male and female forms (301, 302) engaging so as to be able to cause pivoting of the lever in order to separate, as required, the tooth from the notches in order to unlock the bolt (22) normally locked on the keeper (21).

7. A sliding rail according to Claim 6, characterized in that the operating device (30) is mounted on a support (40) integral with the movable element (12).

8. A sliding rail according to Claim 7, characterized in that the support (40) comprises a guide bearing in which the shaft (311) of the operating device (30) is mounted.

9. A sliding rail according to Claim 8, characterized in that the guide bearing has formed in it a chamber (400) and in that this chamber (400) contains a spring (312) for keeping the bolt (22) normally coupled with the operating device (30).

10. A sliding rail according to Claim 9, characterized in that the shaft (311) is designed to slide on itself so as to be able to disengage by means of translation from the coupling system (300) which associates it with the bolt (22), in that the bolt (22) has a locking boss intended to cooperate with the operating device (30) or its support (40) so as to serve as a stop memorising the adjustment position so that when the shaft (311) is rotated the bolt (22) normally locked on the keeper (21) pivots so as to be unlocked from the keeper (21) while remaining integral, during translation, with the movable element (12) by means of interposition of the engaged coupling system (300) and so that, when the shaft (311) is slid against the axial forces of the spring (312), the bolt (22) remains immobile normally locked in position in the keeper (21) while being separated from the movable element (12) when the coupling system (300) is disengaged.

11. A sliding rail according to any one of Claims 1 to 10, characterized in that the fixed element (11) and the movable element (12) of the sliding rail are aluminium-based and the reinforcing piece (50) is iron-based.

## Patentansprüche

1. Gleitschiene, insbesondere für Kraftfahrzeugsitz, des Typs mit einem festen Element (11) und einem beweglichen Element (12), die in einer Translationsrichtung (100) relativ zueinander gleiten können, einem Balzen (20), der einen Schließhaken (21), der dem festen Element (11) zugeordnet ist, und einen Riegel (22) umfaßt, der dem beweglichen Element (12) zugeordnet ist und mit dem Schließhaken (21) zusammenwirkt, um an diesem letzteren nach Belieben verriegelt oder entriegelt zu werden, um das bewegliche Element (12) relativ zum festen Element (11) unbeweglich zu machen oder freizugeben, einem Bedienungselement (30), das am beweglichen Element (12) angebracht ist und dem Riegel (22) durch eine Kupplung (30) zugeordnet ist, derart, daß der normalerweise am Schließhaken (21) verriegelte Riegel (22) entriegelt werden kann, wobei das feste Element (11) mit einem Boden oder einer Fußplatte durch Befestigungsmittel (102) verbunden ist und ein longitudinales, inneres Element (50) aufweist, das lokal den Schließhaken (21) bildet, dadurch gekennzeichnet, daß das innere Element eine am Boden oder an der Fußplatte über Befestigungsmittel (102) verankerte verstärkung (50) ist.

2. Cleitschiene nach Anspruch 1, dadurch gekennzeichnet, daß das feste Element (11) einen Querschnitt in Form eines C besitzt, in dem ein longitudinaler Schlitz (101) ausgespart ist, der parallel zur Translationsrichtung (100) offen ist, und daß die Verstärkung (50) einen L-förmigen Querschnitt besitzt, wovon ein Schenkel (52) wenigstens lokal an der Innenseite des C gegenüber dem Schlitz (101) angeordnet ist und der andere Schenkel (51) auf einer an den Schlitz (101) angrenzenden Seite des C aufruht.

3. Gleitschiene nach Anspruch 2, dadurch gekennzeichnet, daß der Schenkel (52) der Verstärkung (50), der wenigstens lokal an der Seite des C gegenüber dem Schlitz (101) angeordnet ist, eine freie Schnittfläche (520) aufweist und daß diese Schnittfläche (520) so beschaffen ist, daß sie als Schließhaken (21) dient.

4. Gleitschiene nach irgendeinem der Ansprüche 2 und 3, dadurch gekennzeichnet, daß der Schenkel (51) der Verstärkung und die an den Schlitz (101) angrenzende Seite des C, auf der er aufruht, die Befestigungsmittel (102) aufnehmen.

5. Gleitschiene nach Anspruch 4, dadurch gekennzeichnet, daß durch die an den Schlitz (101) des festen Elements (11) angrenzende Seite des C wenigstens eine Bohrung (111) verläuft und daß durch den Schenkel (51) der Verstärkung (50), der auf dieser aufruht, wenigstens ein Aufnahmesitz (521) verläuft, wobei die Bohrung (111) und der Aufnahmesitz (521) entsprechend angeordnet sind, um die Befestigungsmittel (102) aufzunehmen.

6. Gleitschiene nach irgendeinem der Ansprüche 1 bis 5, dadurch gekennzeichnet, daß der Schließhaken (21) des Bolzens (20) aus auf der Verstärkung (50) regelmäßig verteilten Kerben gebildet ist, daß der Riegel (22) ein Hebel ist, der in seiner zur Seite des C gegenüber dem Schlitz (101) des festen Elements (11) parallelen Ebene beweglich angebracht ist und mit wenigstens einem Zahn versehen ist und daß das Bedienungselement (30) eine Achse (311) enthält, die sich um sich selbst drehen kann, frei durch den Schlitz (101) verläuft, an einem ihrer freien Enden die Kupplung (300) trägt, die sie mit dem Riegel (22) verbindet, und nicht kreisförmige, komplementäre Steck- und Buchsenformen (301, 302) umfaßt, derart, daß sie den Hebel schwenken kann, um den Zahn von den Kerben nach Belieben zu trennen, um den Riegel (22), der normalerweise am Schließhaken (21) verriegelt ist, zu entriegeln.

7. Gleitschiene nach Anspruch 6, dadurch gekennzeichnet, daß das Bedienungselement (30) durch einen mit dem beweglichen Element (12) verbundenen Träger (40) getragen wird.

8. Gleitschiene nach Anspruch 7, dadurch gekennzeichnet, daß der Träger (40) ein Führungslager enthält, in dem die Achse (311) des Bedienungselements (30) angebracht ist.

9. Gleitschiene nach Anspruch 8, dadurch gekennzeichnet, daß das Führungslager eine Kammer (400) aufweist und daß diese Kammer (400) eine Feder (312) enthält, um den Riegel (22) normalerweise in einem eingekuppelten Zustand mit den Bedienungselement (30) zu halten.

10. Gleitschiene nach Anspruch 9, dadurch gekennzeichnet, daß die Achse (311) längs ihrer selbst in der Weise gleiten kann, daß sie durch Translation die Kupplung (300), die sie mit dem Riegel (22) verbindet, auskuppeln kann, daß der Riegel (22) einen Arretierungswulst trägt, der dazu bestimmt ist, mit dem Bedienungselement (30), d. h. mit dessen Träger (40), zusammenzuwirken, um als Speicheranschlag für die Einstellposition zu dienen, derart, daß bei einer Drehung der Achse (311) der normalerweise am Schließhaken (21) verriegelte Riegel (22) schwenkt, um sich vom Schließhaken (21) zu entriegeln, wobei er in Translationsrichtung mit dem beweglichen Element (12) über die eingekuppelte Kupplung (300) verbunden bleibt, und derart, daß bei einem Gleiten der Achse (311) entgegen den axialen Kräften der Feder (312) der Riegel (22), der normalerweise im Schließhaken (21) verriegelt ist, unbeweglich bleibt und vom beweglichen Element (12) gelöst wird, wenn die Kupplung (300) ausgekuppelt ist.

11. Gleitschiene nach irgendeinem der Ansprüche 1 bis 10, dadurch gekennzeichnet, daß das feste Element (11) und das bewegliche Element (12) der Gleitschiene auf Aluminiumbasis hergestellt sind und die Verstärkung (50) auf Eisenbasis hergestellt ist.
